# EUROPEAN PATENT SPECIFICATION

(11) **EP 1 470 602 B1**
(45) Date of publication and mention of the grant of the patent: **08.10.2008**
(21) Application number: 03707533.0
(22) Date of filing: 27.01.2003
(51) Int. Cl.: H01M 6/00

(54) **MODULAR RACK BATTERY SYSTEM**
MODULARES TRÄGERSYSTEM FÜR BATTERIEN
SYSTEME DE PILE A BATI MODULAIRE

(30) Priority: 29.01.2002 GB 0201917; 06.11.2002 US 289133
(43) Date of publication of application: 27.10.2004
(73) Proprietor: Enersys European Holdings Co., Reading, PA 19605 (US)
(72) Inventor: PARTINGTON, Kenneth, Michael, Longridge, Lancashire PR3 3WS (GB)
(74) Representative: Popp, Eugen
(86) International application number: PCT/US2003/002243
(87) International publication number: WO 2003/065483

(56) References cited:
- WO-A-00/79619
- DE-U- 20 000 776
- DATABASE WPI Section PQ, Week 199920 Derwent Publications Ltd., London, GB; Class Q13, AN 1999-238529 XP002253825 & JP 11 067178 A (NISSAN MOTOR CO LTD), 9 March 1999 (1999-03-09)

## Description

### FIELD OF THE INVENTION

The present invention relates generally to batteries and, more particularly, to devices for connecting and stacking batteries.

### BACKGROUND OF THE INVENTION

Rack mounted power supply batteries, including rack mounted power supply batteries for telecom use, typically have non-modular designs. Often, the batteries which ordinarily have a rectangular shape, are mounted vertically on a shelf in a horizontal arrangement. Electrical connections can be made after all the batteries are in place.

It may be difficult to make electrical connections in such an arrangement due to a lack of space from the battery to the steel cabinet and the risk of touching connections and shorting the electrical connections between batteries. Furthermore, horizontally arranged batteries may produce heavy loads on the underlying shelf, causing it to bow significantly.

WO 00/79619 is considered as the closest priort art. This document describes a modular power supply comprising a plurality of batteries. The batteries are provided with multiple terminals which may interact with a circuit board of a housing of the modular power supply. Alternatively, jumpers are provided for connecting the terminals of adjacent batteries. The batteries may be connected together to form modules of multiple batteries for connection with the housing of the modular power supply.

### SUMMARY OF THE INVENTION

In view of the above discussion, devices for stacking and connecting batteries are provided. In certain embodiments, the device includes a plurality of batteries connectable in series and arranged in a vertically stacked configuration. Each of the batteries includes opposite first and second lateral faces and a positive terminal and a negative terminal adjacent the first face. The first and second lateral faces each have nesting topography thereon. A first substantially vertically oriented sideplate has nesting topography thereon configured to receive the nesting topography of the first faces of the batteries and an electrical connector connected to a positive terminal of one battery and a negative terminal of an adjacent battery. A second substantially vertically oriented sideplate has nesting topography configured to receive the nesting topography of the second faces of the batteries.

In other embodiments, a battery is provided having a substantially rectangular housing having opposed lateral side faces, a positive terminal and a negative terminal, the terminals being located adjacent the first face, each of the first and second faces having one of a substantially horizontally disposed groove and rib adapted to mount on and nest with a complimentary side plate.

### BRIEF DESCRIPTION OF THE DRAWINGS

**Figure 1** is a partial perspective view of a device according to embodiments of the invention with outside plate removal.

**Figure 2** is a front view of the device of Figure 1 with both side plates shown.

### DETAILED DESCRIPTION OF THE INVENTION

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements throughout. Thicknesses and dimensions of some components may be exaggerated for clarity.

The present invention relates to rack mounted batteries, including, but not limited to, standby or uninterruptible power supplies for telecom usage. Rack mounted batteries according to embodiments of the present invention may be installed and connected to one another with increased speed and less difficulty than current configurations.

Typical battery sizes can include 24 or 48 volt arrangements, and the size of the battery can be assigned according to the specific cabinet architecture employed. This can include 19 or 23 inch installation systems or miscellaneous racks and cabinet architectures such as those defined by and constructed in accordance with the engineering requirements published by the European Telecommunication Standard (ETSI). The batteries may be valve-regulated lead acid (VRLA) batteries, although other types of batteries known to those of skill in the art may be used, including zinc-carbon batteries, alkaline batteries, nickelcadmium batteries, nickel-metal hydride batteries, lithium-ion batteries, zinc-air batteries, zinc-mercury oxide batteries, silver-zinc batteries, and metal-chloride batteries. Typical VRLA batteries include alternating lead and lead oxide plates in an electrolyte sulfuric acid and water solution. The electrolyte solution causes a chemical reaction that produce electrons which collect on the negative terminal of the battery, thereby causing current to flow from the positive terminal to the negative terminal through an attached device.

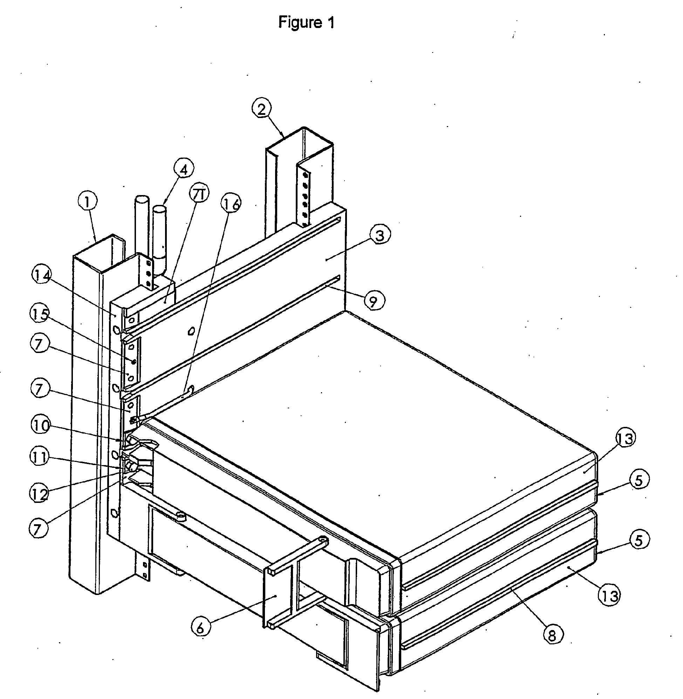

**Figure 1** shows a 12 volt, 100 Ah battery **5** that can be connected in series with one or more batteries. For example, the battery **5** can be connected in series with a total of four 12 volt, 100 Ah (Ampere hour) monobloc batteries to form a 48 volt, 100 Ah power supply. The battery **5** is connected to a sideplate **3.** The sideplate **3** shown is suitable for use in a standard nineteen inch rack cabinet with a depth of 400mm. The batteries **5** include positive and negative terminals **10** and **11**, respectively. Other sizes and numbers of batteries can be used. For example, two 12 volt batteries or three 8 volt batteries can be used to form a 24 volt power supply. Variously sized sideplates and rack cabinets can also be used.

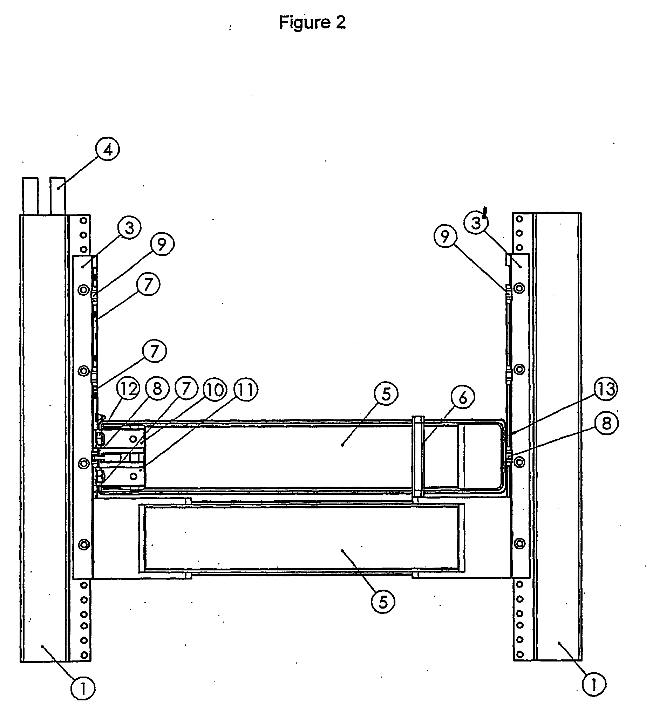

The sideplate **3** is mounted between two vertically extending support members **1** and **2,** which can be provided within a housing cabinet (not shown). A second sideplate **3'** (shown in **Figure 2** can be mounted between a second pair of vertically extending support members (front member **1** is shown in **Figure 2** at the opposing end of the monobloc battery stack. The sideplates **3, 3'** include horizontally disposed grooves **9** at regular vertical intervals.

Each of the monobloc batteries **5** is provided with ribs **8** on its vertical sides **13** which are configured to slide within the grooves **9** provided in the sideplates **3**. The grooves **9** and ribs **8** guide and secure the monobloc battery between the sideplates **3.** Thus, the batteries **5** are mounted at a fixed distance from one another in spaced apart, vertically stacked configuration.

Those of skill in the art will recognize that alternative embodiments of the stacking mechanisms that differ from that illustrated herein may also be suitable. For example, the grooves **9** and ribs **8** may be replaced with knobs, posts, a series of disconnected grooves and ribs or other nesting topography that prevents relative movement between the batteries **5** and the sideplates **3**. Of course, the grooves **9** and ribs **8** may be reversed (*i.e*., the ribs being located on the sideplates and the grooves being located on the battery), as may also be the case for other example of nesting topography.

The monobloc batteries **5** may include one or more pivoting handles **6** to assist in positioning the batteries **5** between the sideplates **3.** The foldout handles **6** are movable between an extended open position and a closed position. When situated in the closed position, the foldout handles **6** can provide shielding to the positive and negative terminals **10** and **11** of alternating batteries to prevent shortages.

The sideplate **3** includes a vertical front edge **14,** on which are mounted electrically conductive connectors **7.** With the exception of the batteries **5** at the top and bottom of the stack, the connectors **7** are positioned such that they extend between the top portion of one monobloc battery **5** and the bottom portion of the above adjacent monobloc battery **5.** The positive or negative terminal **10** or **11** of one monobloc battery **5** is electrically connected to the terminal of opposite polarity of an adjacent monobloc battery **5** by the connector **7** so that all of the batteries **5** are connected in series. The connectors **7** include an opening **15** for auxiliary wiring **16** that can be connected on the side of the connector **7** opposite the battery **5.** For example, the opening **15** can connect a testing wire that electrically connects to connectors 7 to test the performance or present level of charge of a battery **5.**

In the embodiments shown in **Figures 1** and **2****,** the positive and negative battery terminals **10** and **11** and the connectors 7 include holes which are aligned to receive a fastening bolt **12** that electrically connect the terminals **10** and **11** to the connectors **7** utilizing a threaded bushing held captive on the connector **7.** Other fastening mechanisms known to those of skill in the art, such as screws or pins, may be used, as may other electrical connection techniques. When the device shown is in place inside a cabinet, the fastening nut and bolt **12** are preferably readily accessible from the front of the cabinet.

The top connector **7T** and the bottom connector (not shown) are electrically connected to terminals (such as terminals **10** and **11)** of opposite polarity on the top and bottom monobloc batteries **5**. The top connector **7T** and the bottom connector are connected to one of a pair of conductive cables **4** which transfer the battery power out of the device.

The side plates **3** and **3'** can be installed into a cabinet, for example, on vertical support members **1** and **2** of the cabinet. The cabinet can have dimensions of 600 mm in width by 400 mm in depth and 1600 mm in height. The side plates **3** and **3'** can be configured to complement or otherwise attach to the support members **1** and **2.** For example, either or both of the support members **1, 2** may have a ridge **21,** and the side plates **3** and **3'** may have a complementary notch **25** for receiving the ridge **21.** The ridge **21** may protrude away from the support member **1, 2** and include holes **23.** The notch **25** can include corresponding holes (not shown) such that the sideplates **3** and **3'** can be bolted to the support members **1** and **2** through holes **23** and the corresponding holes on notch **25.**

In the illustrated embodiment, one side plate **3** includes battery connectors **7** while the opposing side plate **3'** (in **Figure** 2) does not. The side plates **3** and **3'** can be suitable to modular cabinet arrangements with facilities to accept batteries **5,** which can be custom designed. Various sizes of batteries **5** can be used, including batteries with dimensions that are a multiple or division of modular units (HU/U), such as 2, 2.5 or 3 HU/U in height. One unit (HU/U) is equivalent to 1.75 inches (44.45mm) and is an international standard for rack mounted electrical equipment. Typically the side plates **3, 3'** will be between about 14 and 21 inches (335.6 and 533 mm) in height, and the connectors 7 attached thereto will be between about 2.5 and 3 inches (63.5 and 76.2 mm) in height.

In a further embodiment, the battery **5** may be arranged such that terminals **10** and **11** of opposite polarity are located at opposite ends of the battery **5.** In such embodiments, both side plates **3** can include battery connectors **7** which may allow the multiple batteries **5** to be connected in either a series or parallel configuration.

The sideplates **3** can be electrically wired to incoming and outgoing cables **4** and any required auxiliary connections prior to installation of the batteries **5.** The connections may be more easily made as a result of increased space prior to battery installation. The batteries **5** can then be slid into place and fastened to connectors **7.** The connectors **7** may be shielded from contact with ground during this process.

The foregoing is illustrative of the present invention and is not to be construed as limiting thereof. Although a few exemplary embodiments of this invention have been described, those skilled in the art will readily appreciate that many modifications are possible in the exemplary embodiments without materially departing from the novel teachings and advantages of this invention. Accordingly, all such modifications are intended to be included within the scope of this invention as defined in the claims. Therefore, it is to be understood that the foregoing is illustrative of the present invention and is not to be construed as limited to the specific embodiments disclosed, and that modifications to the disclosed embodiments, as well as other embodiments, are intended to be included within the scope of the appended claims. The invention is defined by the following claims.

## Claims

1. A battery stacking and connecting assembly, the assembly comprising: a plurality of batteries connected in series and arranged in a vertically stacked configuration, each of the batteries comprising opposite first and second lateral faces, a positive terminal and a negative terminal, the terminals being located adjacent the first face, the first and second lateral faces each having nesting topography thereon; a first substantially vertically oriented sideplate having nesting topography thereon configured to receive the nesting topography of the first faces of the batteries and having an electrical connector connected to a positive terminal of one battery and a negative terminal of an adjacent battery; and a second substantially vertically oriented sideplate having nesting topography configured to receive the nesting topography of the second faces of the batteries.

2. The assembly of Claim 1, wherein the nesting topography of the battery first face comprises one of a rib and a groove, and wherein the nesting topography of the first sideplate comprises the other of a groove or a rib.

3. The assembly of Claim 1, wherein the nesting topography of the battery first face comprises a rib extending substantially horizontally.

4. The assembly of Claim 1, further comprising a handle attached to at least one of the batteries.

5. The assembly of Claim 4, wherein the handle is configured to provide shielding for at least one of the positive and negative terminals of a battery.

6. The assembly of Claim 1, further comprising two sets of first and second elongate vertically extending members for mounting the first and second sideplates.

7. The assembly of Claim 1, the electrical connector comprising apertures adapted to receive a connecting member that connects the positive and negative terminals to the electrical connector.

8. The assembly of Claim 1, the electrical connector comprising an aperture adapted to receive auxiliary wiring.

9. The assembly of Claim 1, further comprising a set of first and second conductive cables for transferring power, the first conductive cable connectable to a positive terminal on one of the batteries, and the second conductive cable connectable to a negative terminal on another of the batteries.

10. The assembly of Claim 1, wherein the batteries together comprise a48 volt standby power supply.

11. The assembly of Claim 1, wherein the batteries together comprise a 24 volt standby power supply.

12. The assembly of Claim 1, wherein each of the batteries is a 12 volt battery.

13. The assembly of Claim 1, wherein each of the batteries have horizontal dimensions suitable for a 19 inch (about 48 cm) rack architecture.

14. The assembly of Claim 1, wherein each of the batteries have horizontal dimensions suitable for a 23 inch (about 58 cm) rack architecture.

15. A battery, comprising: a substantially rectangular housing having opposed lateral side faces, a positive terminal and a negative terminal, the terminals being located adjacent the first face, each of the first and second faces having one of a groove and rib extending in the direction of the major dimension of said first and second faces adapted to mount on and nest with a complimentary side plate as defined in claim 1.

16. The battery of Claim 15, wherein the battery is a 12 volt battery.

17. The battery of Claim 15, wherein the battery has horizontal dimensions suitable for a 19 inch (about 48 cm) rack architecture.

18. The battery of Claim 15, wherein the battery has horizontal dimensions suitable for a 23 inch (about 58 cm) rack architecture.

19. The battery of Claim 15, further comprising an alternating series of lead containing positive and negative electrode plates and an electrolyte solution within the housing.

## Patentansprüche

1. Batterie-Stapel- und Verbindungsanordnung, wobei die Anordnung enthält: eine Mehrzahl von Batterien, welche in Serie verbunden sind und in einem vertikalen Stapelaufbau angeordnet sind, wobei jede von den Batterien eine gegenüberliegende erste und zweite Seitenfläche, einen positiven Anschluss und einen negativen Anschluss, wobei die Anschlüsse zu der ersten Fläche angrenzend positioniert sind, wobei die erste und zweite Seitenfläche jeweils eine verschachtelte Topografie darauf haben, enthält; eine erste im Wesentlichen vertikal gerichtete Seitenplatte, welche eine verschachtelte Topografie darauf hat, welche dazu konfiguriert ist, um die verschachtelte Topografie von den ersten Flächen von den Batterien aufzunehmen, und welche einen elektrischen Verbinder hat, welcher mit einem positiven Anschluss von einer Batterie und einem negativen Anschluss von einer angrenzenden Batterie verbunden ist; und eine zweite im Wesentlichen vertikal gerichtete Seitenplatte, welche eine verschachtelte Topografie hat, welche dazu konfiguriert ist, um die verschachtelte Topografie von den zweiten Flächen von den Batterien aufzunehmen.

2. Anordnung nach Anspruch 1, bei welcher die verschachtelte Topografie von der ersten Fläche von der Batterie eines aus einer Erhebung und einer Nut enthält, und bei welcher die verschachtelte Topografie von der ersten Seitenplatte das weitere aus einer Nut und einer Erhebung enthält.

3. Anordnung nach Anspruch 1, bei welcher die verschachtelte Topografie von der ersten Fläche von der Batterie eine Erhebung enthält, welche sich im Wesentlichen horizontal erstreckt.

4. Anordnung nach Anspruch 1, welche ferner ein Griffstück enthält, welches an zumindest einer der Batterien befestigt ist.

5. Anordnung nach Anspruch 4, bei welcher das Griffstück dazu konfiguriert ist, um eine Abschirmung für zumindest einen aus dem positiven und negativen Anschluss von einer Batterie bereitzustellen.

6. Anordnung nach Anspruch 1, welche ferner zwei Sätze von einem ersten und einem zweiten lang gestreckten, sich vertikal erstreckenden Teil zum Befestigen der ersten und zweiten Seitenplatte enthält.

7. Anordnung nach Anspruch 1, bei welcher der elektrische Verbinder Aperturen enthält, welche dazu ausgelegt sind, um ein Verbindungsteil aufzunehmen, welches den positiven und negativen Anschluss mit dem elektrischen Verbinder verbindet.

8. Anordnung nach Anspruch 1, bei welcher der elektrische Verbinder eine Apertur enthält, welche dazu ausgelegt sind, um eine Zusatzverdrahtung aufzunehmen.

9. Anordnung nach Anspruch 1, welche ferner einen Satz von einem ersten und einem zweiten Verbindungskabel zur Übertragung von einer Leistung enthält, wobei das erste Verbindungskabel mit einem positiven Anschluss an einer der Batterien verbindbar ist, und das zweite Verbindungskabel mit einem negativen Anschluss an einer weiteren von den Batterien verbindbar ist.

10. Anordnung nach Anspruch 1, bei welcher die Batterien zusammen eine 48-Volt Bereitschafts-Energieversorgung enthalten.

11. Anordnung nach Anspruch 1, bei welcher die Batterien zusammen eine 24-Volt Bereitschafts-Energieversorgung enthalten.

12. Anordnung nach Anspruch 1, bei welcher jede von den Batterien eine 12-Volt-Batterie ist.

13. Anordnung nach Anspruch 1, bei welcher jede von den Batterien horizontale Ausmaße hat, welche für eine 19 Inch (etwa 48 cm) Einbaugehäuse-Architektur geeignet sind.

14. Anordnung nach Anspruch 1, bei welcher jede von den Batterien horizontale Ausmaße hat, welche für eine 23 Inch (etwa 58 cm) Einbaugehäuse-Architektur geeignet sind.

15. Batterie, welche enthält: ein im Wesentlichen rechteckiges Gehäuse, welches gegenüberliegende Seitenflächen hat, einen positiven Anschluss und einen negativen Anschluss, wobei die Anschlüsse angrenzend zu der ersten Fläche positioniert sind, wobei jede von der ersten und der zweiten Fläche eines aus einer Nut und einer Erhebung, welche sich in Richtung des Hauptausmaßes von der ersten und zweiten Fläche erstrecken, welche zur Befestigung und Verschachtelung mit einer komplementären Seitenplatte ausgelegt sind, hat, wie in Anspruch 1 bestimmt.

16. Batterie nach Anspruch 15, wobei die Batterie eine 12-Volt-Batterie ist.

17. Batterie nach Anspruch 15, wobei die Batterie horizontale Ausmaße hat, welche für eine 19 Inch (etwa 48 cm) Einbaugehäuse-Architektur geeignet sind.

18. Batterie nach Anspruch 15, wobei die Batterie horizontale Ausmaße hat, welche für eine 23 Inch (etwa 58 cm) Einbaugehäuse-Architektur geeignet sind.

19. Batterie nach Anspruch 15, welche ferner eine abwechselnde Folge von Bleiplatten, welche positive und negative Elektrodenplatten enthalten, und eine Elektrolytlösung innerhalb des Gehäuses enthält.

## Revendications

1. Assemblage d'empilement et de connexion de piles, l'assemblage comprenant : une pluralité de piles connectées en série et disposées selon une configuration d'empilement vertical, chacune des piles comprenant des première et seconde faces latérales opposées, une borne positive et une borne négative, les bornes étant localisées de manière adjacente à la première face, les première et seconde faces latérales ayant chacune sur elle une topographie d'emboîtement ; une première plaque orientée de manière essentiellement verticale ayant sur elle une topographie d'emboîtement configurée pour recevoir la topographie d'emboîtement des premières faces des piles et ayant un connecteur électrique connecté à une borne positive d'une pile et à une borne négative d'une pile adjacente ; et une seconde plaque essentiellement orientée verticalement ayant une topographie d'emboîtement configurée pour recevoir la topographie d' emboîtement des seconde faces des piles.

2. Assemblage selon la revendication 1, dans lequel la topographie d'emboîtement de la première face de la pile comprend soit un épaulement soit une gorge, et dans lequel la topographie d'emboîtement de la première plaque comprend de manière complémentaire soit une gorge soit un épaulement.

3. Assemblage selon la revendication 1, dans lequel la topographie d'emboîtement de la première face de la pile comprend un épaulement s'étendant de manière essentiellement horizontale.

4. Assemblage selon la revendication 1, comprenant en outre une poignée attachée à au moins l'une des piles.

5. Assemblage selon la revendication 4, dans lequel la poignée est configurée pour procurer une protection à au moins l'une des bornes positive et négative d'une pile.

6. Assemblage selon la revendication 1, comprenant en outre deux jeux d'un premier et d'un second membre allongés s'étendant verticalement pour monter les première et deuxième plaques.

7. Assemblage selon la revendication 1, le connecteur électrique comprenant des ouvertures adaptées pour recevoir le membre de connexion qui connecte les bornes positive et négative au connecteur électrique.

8. Assemblage selon la revendication 1, le connecteur électrique comprenant une ouverture adaptée pour recevoir un câblage auxiliaire.

9. Assemblage selon la revendication 1, comprenant en outre un jeu d'un premier et d'un second câbles conducteurs pour le transfert de puissance, le premier câble conducteur étant connectable à une borne positive sur une des piles et le second câble conducteur étant connectable à une borne négative sur une autre des piles.

10. Assemblage selon la revendication 1, dans lequel les piles comprennent ensemble une alimentation de secours de 48 Volts.

11. Assemblage selon la revendication 1, dans lequel les batteries comprennent ensemble une alimentation de secours de 24 Volts.

12. Assemblage selon la revendication 1, dans lequel chacune des piles est une pile de 12 Volts.

13. Assemblage selon la revendication 1, dans lequel chacune des piles a des dimensions horizontales compatibles avec une architecture sur bâti de 19 inch (environ 48 cm).

14. Assemblage selon la revendication 1, dans lequel chacune des piles a des dimensions horizontales compatibles avec une architecture sur bâti de 23 inch (environ 58 cm).

15. Pile comprenant : un châssis essentiellement rectangulaire possédant des faces latérales opposées, une borne positive et une borne négative, les bornes étant localisées de manière adjacente à la première face, chacune des première et seconde faces possédant soit une gorge soit un épaulement s'étendant dans la direction de la dimension la plus grande de ces première et seconde faces, adaptés de manière à être montés sur et à s'emboîter avec une plaque complémentaire telle que définie dans la revendication 1.

16. Pile selon la revendication 15, dans laquelle la pile est une pile de 12 Volts.

17. Pile selon la revendication 15, dans laquelle la pile a des dimensions horizontales adaptées pour une architecture sur bâti de 19 inch (environ 48 cm).

18. Pile selon la revendication 15, dans laquelle la pile a des dimensions horizontales adaptées pour une architecture sur bâti de 23 inch (environ 58 cm).

19. Pile selon la revendication 15, comprenant en outre une série en alternance de plaques contenant des électrodes positive et négative en dérivation et une solution d'électrolyte à l'intérieur du châssis.
